# EUROPÄISCHE PATENTSCHRIFT

(11) **EP 1 121 279 B1**
(45) Veröffentlichungstag und Bekanntmachung des Hinweises auf die Patenterteilung: **05.02.2003**
(21) Anmeldenummer: 99957898.2
(22) Anmeldetag: 13.10.1999
(51) Int. Cl.: B60R 25/04, E05B 49/00

(54) **ZUGANGS- UND START-/FAHRBERECHTIGUNGSSYSTEM FÜR EIN KRAFTFAHRZEUG**
ACCESS AND START/DRIVE AUTHORIZATION SYSTEM
SYSTEME D'AUTORISATION D'ACCES ET DE DEMARRAGE/CONDUITE DESTINE A UN VEHICULE

(30) Priorität: 17.10.1998 DE 19848038
(43) Veröffentlichungstag der Anmeldung: 08.08.2001
(73) Patentinhaber: ROBERT BOSCH GMBH, 70442 Stuttgart (DE)
(72) Erfinder: WEIGL, Andreas, D-76351 Linkenheim-Hochstetten (DE); WEISS, Karl-Ernst, D-76275 Ettlingen (DE); SCHROFF, Clemens, D-76698 Ubstadt-Weiher (DE); WEYERSTALL, Bernd, D-42369 Wuppertal (DE); HUGEL, Robert, D-76199 Karlsruhe (DE); DIEBOLD, Bernd, D-77866 Rheinau (DE); SZABLEWSKI, Piotr, D-42399 Wuppertal (DE)
(86) Internationale Anmeldenummer: DE9903291
(87) Internationale Veröffentlichungsnummer: WO00023303

(56) Entgegenhaltungen:
- DE-A- 4 329 697
- GB-A- 2 262 074
- US-A- 4 446 380

## Beschreibung

### Stand der Technik

Die Erfindung betrifft ein Zugangs- und Start/Freigabeberechtigungssystem für ein Kraftfahrzeug mit einem tragbaren Transponder und einem im Kraftfahrzeug untergebrachten Steuergerät für das Schließsystem und die Motorsteuerung, die in Frage-Antwort-Dialogen mit aufeinander abgestimmten Codeinformationen den Zugang zum Kraftfahrzeug, den Start und die Fahrt des Kraftfahrzeuges freigeben oder sperren.

Derartige Berechtigungssysteme sind in den verschiedensten Ausführungen von Transponder und Steuergerät auf der Basis unterschiedlicher Übertragungsverfahren bekannt. Dabei arbeiten sowohl die Steuergeräte als auch die Frage-Antwort-Dialoge für den Zugang oder den Start und die Fahrt in der Regel unabhängig voneinander und mit verschiedenen Codeinformationen. Dies hat jedoch den Nachteil, dass bei gewaltsamem Eindringen in das Kraftfahrzeug und Auswechseln der Motorsteuerung mit transpondergesteuerter Wegfahrsperre gegen eine andere Motorsteuerung mit dem darauf abgestimmten Transponder das Kraftfahrzeug gestartet und gefahren werden kann. Die Sicherheit des Start/Fahrberechtigungssystems ist daher bei gewaltsamem Eindringen in das Kraftfahrzeug und Austausch der Motorsteuerung nicht gegeben.

Wie die DE 44 03 655 C2 (Oberbegriff des Anspruchs 1) zeigt, ist es auch bekannt, mit dem Zugangsberechtigungs-Frage-Antwort-Dialog nicht nur das Schließsystem des Kraftfahrzeuges zu öffnen und zu verschließen, sondern gleichzeitig auch ein weiteres Steuergerät anzusteuern, das das Motorstartsystem freigibt oder sperrt. Der Start- und Fahrbetrieb des Kraftfahrzeuges wird in bekannter Weise z.B. über einen Anlaßschalter eingeleitet.

Aus der US 4, 446, 380 ist ein schlüsselloses Aktivierungssystem für ein Kraftfahrzeug bekannt. Um in das Innere eines verschlossenen Kraftfahrzeugs zu gelangen, muss der Benutzer einen Code eingeben über eine von außen zugängliche und am Kraftfahrzeug angeordnete Tastatur. Bei einem korrekten Code wird dem Benutzer Zugang in den Innenraum des Kraftfahrzeugs gewährt. Dort ist eine weitere Tastatur vorgesehen, über die er zur Erlangung der Startberechtigung einen weiteren Code eingeben muss. Die entgültige Fahrberechtigung wird jedoch nur gewährt, wenn beide Codes korrekt eingegeben wurden.

DE-A 43 29 697 offenbart eine fernsteuerbare Zugangskontrolleinrichtung mit einem tragbaren Transponder in Form einer Chipkarte. Um ein Kraftfahrzeug zu entriegeln, findet ein Frage-Antwort-Dialog zwischen der Sende- und Empfangseinheit und dem Transponder statt. Die Zugangskontrolleinrichtung kann auch als Wegfahrsprerre wirken, wenn beispielsweise bei Betätigung eines Motorstartknopfes ein Frage-Antwortdialog in der bereits beschriebenen Art und Weise stattfindet. Wird der Benutzer mit dem Transponder im Fahrzeuginneren detektiert und als berechtigt erkannt, so wird der Motor gestartet.

Es ist Aufgabe der Erfindung, ein Zugangs- und Start/Fahrberechtigungssystem der eingangs erwähnten Art in der Sicherheit gegenüber unberechtigten Austausch der Motorsteuerung und des Zugangskontrollsystems wesentlich zu verbessern.

Diese Aufgabe wird nach der Erfindung dadurch gelöst, dass die Freigabe des Starts und der Fahrt des Kraftfahrzeuges nach erfolgreichem Start/Fahrberechtigungs-Frage-Antwort-Dialoges mit dem Transponder von einem vorausgegangenen erfolgreichen Zugangsberechtigungs-Frage-Antwort-Dialog mit dem Transponder abhängig gemacht ist.

Das verbesserte Start/Fahrberechtigungssystem setzt dabei einen ordnungsgemäßen Zugang zum Kraftfahrzeug voraus, der nur mit dem auf die eingebaute Zugangsberechtigung abgestimmten Transponder möglich ist. Der Besitz einer neuen Motorsteuerung und des dazu passenden Transponders reicht nicht aus, das Kraftfahrzeug nach gewaltsamem Eindringen und Austausch der Motorsteuerung zu starten und zu fahren. Das Zugangsberechtigungssystem und das Start/Fahrberechtigungssystem sind zwangsweise gekoppelt und bringen dadurch eine wesentlich größere Sicherheit.

Das Zugangsberechtigungssystem arbeitet am einfachsten in der Weise, dass die Einleitung des Zugangsberechtigungs-Frage-Antwort-Dialoges am Steuergerät von einem Einleitungssignal abhängig ist, das durch eine manuelle Schaltmaßnahme am Kraftfahrzeug oder eine Schaltmaßnahme am Transponder auslösbar ist oder dass die Einleitung des Zugangsberechtigungs-Frage-Antwort-Dialoges von der Anwesenheit des Transponders in einem von einem Näherungsschalter im Kraftfahrzeug überwachten Umfeld des Kraftfahrzeuges abhängig gemacht ist. Als Schaltmaßnahme am Kraftfahrzeug wird vorzugsweise das Betätigen eines Türgriffes oder dgl. verwendet. Bei Vorhandensein eines Näherungsschalters wird über diesen festgestellt, ob sich eine Person im überwachten Umfeld des Kraftfahrzeuges befindet. Bejahendenfalls erfolgt die Auslösung eines Zugangsberechtigungs-Fragesignals des Steuergeräts, das nur korrekt beantwortet werden kann, wenn diese Person den dazugehörigen Transponder bei sich trägt.

Für das Start/Fahrberechtigungssystem wird nach erfolgreichem Zugangsberechtigungs-Frage-Antwort-Dialog nach der Erfindung so verfahren, dass das Zugangskontroll-Steuergerät nach erfolgreichem Zugangsberechtigungs-Frage-Antwort-Dialog die Entriegelung des Schließsystems einleitet und eine Zusatzinformation für den nachfolgenden Start/Fahrberechtigungs-Frage-Antwort-Dialog bereithält.

Im Start/Fahrberechtigungssystem ist nach einer Ausgestaltung vorgesehen, dass die Einleitung des Start-Fahrberechtigungs-Frage-Antwort-Dialoges von dem Ablegen des Transponders in ein Ablagefach im Kraftfahrzeug oder einem anderen im Kraftfahrzeug ausgelösten Einleitungssignal für das der Start-/Fahrberechtigung funktional zugeordnete Steuergerät abhängig gemacht ist, so dass einfach so verfahren werden kann, dass bei erfolgreichem Start/Fahrberechtigungs-Frage-Antwort-Dialog die Ansteuerung der Motorsteuerung zur Freigabe des Starts und der Fahrt nur bei anstehender Freigabe-Zusatzinformation vom vorausgegangenen Zugangsberechtigungs-Frage-Antwort-Dialog erfolgt.

Die Sicherheit gegen unerlaubtes Starten und Fahren des Kraftfahrzeuges kann dadurch noch erhöht werden, dass die Freigabe des Starts und der Fahrt für das Kraftfahrzeug zusätzlich vom Schaltzustand des Schließsystems abhängig gemacht ist oder dass für die Freigabe des Starts und der Fahrt des Kraftfahrzeuges vorgegebene Zustände und/oder Betätigungsfolgen weiterer Fahrzeugkomponenten einbezogen sind.

Besonders vorteilhaft ist, wenn außer der Motorsteuerung noch weitere für das Starten und das Fahren eines Kraftfahrzeuges erforderliche Komponenten mittels der vom betreffenden Steuergerät nach erfolgreicher Durchführung des Zugangs-Frage-Antwort-Dialoges an diese Komponenten weitergegebenen Zusatzinformation zum Starten und Fahren freigeschaltet werden, beispielsweise die Getriebesteuerung.

Es können dabei das jeweilige Steuergerät als auch die Motorsteuerung und alle anderen in das erfindungsgemäß gestaltete System einbezogenen Komponenten sowohl durch eine nach ordnungsgemäßem Verriegeln des Fahrzeuges im

Steuergerät gewonnene und gespeicherte sowie an alle einbezogenen Komponenten geleitete Zusatzinformation als auch nach Abklemmen ihrer Versorgungs/Betriebsspannung in einen funktional gesperrten Zustand gebracht werden, der erst durch die nach korrektem Zugang vorliegende Zusatzinformation wieder aufgehoben werden kann. Dadurch werden ausgetauschte/ausgebaute Komponenten als Ersatzteile unbrauchbar, was den Anreiz zum Diebstahl erheblich reduziert.

Eine vorteilhafte Ausführung der Erfindung sieht anstelle getrennter Steuergeräte für die Zugangskontrolle und die Start-/Fahrberechtigungskontrolle ein einziges Steuergerät vor. Diese beiden Aufgaben können aber auch von einem anderen bereits für andere Zwecke vorhandenen Steuergerät, z.B. der Motorsteuerung erfüllt werden bei entsprechender Funktionserweiterung.

Eine vorteilhafte Gestaltung der Erfindung sieht das gegenseitige Anlernen von Transponder, Steuergerät, Motorsteuerung und anderer betriebsrelevanter Komponenten am Fertigungsende beim Fahrzeughersteller vor. Nicht angelernte, weil unberechtigt ausgetauschte Komponenten werden von den anderen erkannt, was zur Funktionsunfähigkeit führt. Zum Anlernen sind besonders geschützte und mit entsprechender Berechtigung ausgestattete Berechtigungsnachweise erforderlich (z.B. "Red Key", Master-Transponder usw.).

Die erfindungsgemäße Verbindung zwischen Schließanlage und Wegfahrsperre bzw. Motorsteuerung zwecks Datenaustausch bietet den weiteren Vorteil, dass durch von einer normalen Bedienung abweichende Bedienung von vorteilhafterweise Innenbetätigungseiementen der Schließanlage bei entriegeltem Kraftfahrzeug eine gewaltsame Wegnahme des Kraftfahrzeugs ("Car-Napping") angezeigt werden kann, woraufhin die betriebsrelevanten Steuergeräte des Kraftfahrzeugs nur noch eine kurze Fahrt erlauben, bevor sie sich und damit das Kraftfahrzeug völlig stilllegen. Durch die noch zugestandene Fahrstrecke kann sich der Fahrer entweder nach irrtümlicher Auslösung noch aus einer Gefahrensituation entfernen oder, nachdem er das Kraftfahrzeug verlassen mußte, sich selbst aus einer bedrohlichen Lage entfernen oder durch die Möglichkeit, dass der/die Verbrecher mit dem gewaltsam weggenommenen Kraftfahrzeug sich vorläufig entfernen können, nicht mehr bedroht wird. Auslösend kann beispielsweise das mehrfache aufeinanderfolgende Betätigen des Türinnengriffs (vorzugsweise der Fahrertür) dienen, da dieser Griff auch beim Aussteigen üblicherweise benutzt wird und die Notsignalisierung kaschiert werden kann.

Die Erfindung wird anhand eines als Blockschaltbild dargestellten Ausführungsbeispiels näher erläutert. Die Kontrollen für Zugang und Start-/Fahrberechtlgung werden hierbei von einem einzigen, speziellen Steuergerät ausgeführt.

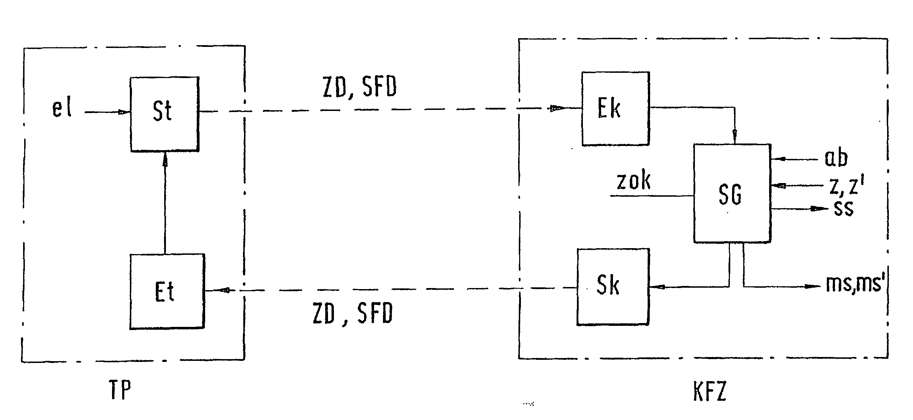

In der Zeichnung sind die Sendeeinrichtung Sk und die Empfangseinrichtung Ek des Kraftfahrzeuges KFZ und die Sendeeinrichtung St und die Empfangseinrichtung Et des Transponders TP dargestellt, die für die Durchführung des Zugangsberechtigungs-Frage-Antwort-Dialoges ZD und den Start/Fahrberechtigungs-Frage-Antwort-Dialog SFD erforderlich sind und die Übertragungskanäle Sk-Et sowie St-Ek in beiden Übertragungsrichtungen bilden. Die physikalische Ausbildung dieser beiden Übertragungskanäle Sk-Et/St-Ek ist dabei unerheblich; es können auch unterschiedliche Ausbildungen für den Dialog ZD und den Dialog SFD benutzt werden.

Im Kraftfahrzeug KFZ ist ein Steuergerät SG untergebracht, das die Motorsteuerung und das Schließsystem in oben beschriebener Art steuert. Die Arbeitsweise des Zugangs- und Start/Fahrberechtigungssystems nach der Erfindung läuft in der folgenden Weise ab:

Will der mit dem richtigen Transponder TP ausgestattete Fahrer sich Zugang zum Kraftfahrzeug KFZ verschaffen, erhält das Steuergerät SG ein Einleitungssignal z, das auf unterschiedliche Weise ausgelöst und an das Steuergerät SG übertragen werden kann. So kann z.B. das Betätigen eines Türgriffes oder eines anderen Schaltelementes am Kraftfahrzeug KFZ direkt das Einleitungssignal z erzeugen. Es kann aber auch durch eine Schaltmaßnahme el am Transponder TP eingeleitet und über die Sendeeinrichtung St und die Empfangseinrichtung Ek als Einleitungssignal z erkannt werden. Die Einleitung kann auch automatisch über einen Näherungsschalter erfolgen, der die Anwesenheit einer Person in einem überwachten Umfeld des Kraftfahrzeuges registriert.

Ist die Einleitung des Zugangsberechtigungs-Frage-Antwort-Dialoges ZD am Steuergerät SG erkannt, läuft dieser Dialog ZD in bekannter Weise über die Übertragungskanäle Sk-Et und St-Ek ab; dann gibt das Steuergerät SG nach erfolgreicher Identifizierung eines zugehörigen Transponders die Entriegelung des Schließsystems frei, wie mit dem Steuersignal ss angedeutet ist. Diese Entriegelung kann in bekannter Weise je nach verwendetem Schließsystem ablaufen.

Zudem wird im Steuergerät SG eine Zusatzinformation zok gespeichert, die den ordnungsgemäß erfolgten Zugang zum Kraftfahrzeug KFZ kennzeichnet, wobei durchaus auch der Schaltzustand des Schließsystems mit einbezogen werden kann.

In gleicher Weise wird beim Verriegeln des Kraftfahrzeuges KFZ verfahren, wobei der dazu ebenfalls durchgeführte Zugangsberechtigungs-Frage-Antwort-Dialog ZD manuell oder automatisch nach Schließen der Fahrzeugtür(en) ausgelöst wird. Das Steuergerät SG speichert eine entsprechende Zusatzinformation zok und steuert mit der Information ms die Motorsteuerung und andere in das erfindungsgemäße System eingebundene Komponenten so, dass diese bis zum Erhalt einer Information über einen korrekten Zugang zum Kraftfahrzeug KFZ außer Funktion gesetzt sind.

Hat der Fahrer auf dem Fahrersitz Platz genommen, dann wird der Transponder TP z.B. in einem Ablagefach abgelegt, was zur Auslösung eines Steuersignals ab am Steuergerät SG führt. Dem Steuergerät SG ist damit angezeigt, dass der Start/Fahrberechtigungs-Frage-Antwort-Dialog SFD durchgeführt werden kann oder soll. Dieses Steuersignal ab kann auch durch andere Schaltmaßnahmen im Kraftfahrzeug KFZ ausgelöst werden, die von der Verwendung besonderer Transponderausgestaltungen und Einrichtungen zur Durchführung des Start/Fahrberechtigungsdialoges SFD abhängig sein können. Darüberhinaus lassen sich auch die Schaltzustände und/oder Betätigungsfolgen weiterer Fahrzeugkomponenten mit in die Auslösung dieses Steuersignals ss einbeziehen.

Der Start/Fahrberechtigungs-Frage-Antwort-Dialog SFD läuft in bekannter Weise wieder über die Übertragungskanäle Sk-Et und St-Ek ab, wobei auch andere Codeinformationen wie beim Zugangsberechtigungs-Frage-Antwort-Dialog ZD verwendet werden können. Ist der Start/Fahrberechtigungs-Frage-Antwort-Dialog SFD erfolgreich abgelaufen, dann ist ganz entscheidend, dass die Freigabe ms der Motorsteuerung und anderer erfindungsgemäß gestalteter und verwendeter Komponenten des Kraftfahrzeuges KFZ nur dann erfolgt, wenn das Steuergerät SG die Zusatzinformation zok des erfolgreich abgelaufenen Zugangsberechtigungs-Frage-Antwort-Dialoges ZD registriert hat. Damit ist gewährleistet, dass nach gewaltsamem Eindringen in das Kraftfahrzeug KFZ und Austausch der Motorsteuerung mit dem Steuergerät SG, das ein Teil derselben sein kann oder eine getrennte Einheit darstellt, ein Starten und Fahren des Kraftfahrzeuges KFZ verhindert ist.

Erhält das Steuergerät SG über eine unnormale Betätigung des Fahrertür-Innengritfes ein ebenfalls "abnormales" Signal Z' von der Schließanlage, beispielsweise durch kurz aufeinanderfolgendes mehrfaches Betätigen des Fahrertür-Innengriffs innerhalb eines vorgegebenen Zeitintervalls, interpretiert dies das Steuergerät SG als Notsignal und sendet an die Motorsteuerung und andere in das erfindungsgemäße System eingebundene, betriebsrelevante Komponenten eine entsprechende Information ms', die in diesen Komponenten eine derartige Steuerroutine auslöst, nach deren Ablauf sich alle diese Komponenten verriegeln und außer Funktion setzen. Dadurch wird nach kurzer Nutzungsdauer oder Fahrstrecke das Kraftfahrzeug automatisch still gelegt. Ein eventuell noch vorhandener Transponder TP wird zuvor von der Fahrberechtigung erkannt und für weitere Verwendung gesperrt. Aus diesem Zustand kann das Kraftfahrzeug nur nach erfolgreichem Zugangs-Frage-Antwort-Dialog ZD wieder gebracht werden, wenn dazu ein anderer Transponder TP verwendet wird, der dem Steuergerät SG bekannt ist.

## Patentansprüche

1. Zugangs- und Start-/Fahrberechtigungssystem für ein Kraftfahrzeug mit einem tragbaren Transponder und einem im Kraftfahrzeug untergebrachten Steuergerät für das Schließsystem und die Motorsteuerung, die in Frage-Antwort-Dialogen mit aufeinander abgestimmten Codeinformationen den Zugang zum Kraftfahrzeug, den Start und die Fahrt des Kraftfahrzeuges freigeben oder sperren, **dadurch gekennzeichnet, dass** die Freigabe (ms) des Starts und der Fahrt des Kraftfahrzeuges (KFZ) nach erfolgreichem Start/Fahrberechtigungs-Frage-Antwort-Dialoges (SFD) mit dem Transponder (TG) von einem vorausgegangenen erfolgreichen Zugangsberechtigungs-Frage-Antwort-Dialog (ZD) mit dem Transponder (TG) abhängig gemacht ist.

2. Zugangs- und Start-/Fahrberechtigungssystem nach Anspruch 1,
**dadurch gekennzeichnet,**
**dass** die Einleitung des Zugangsberechtigungs-Frage-Antwort-Dialoges (ZD) am Steuergerät (SG) von einem Einleitungssignal (z) abhängig ist, das durch eine manuelle Schaltmaßnahme (z) am Kraftfahrzeug (KFZ) oder eine Schaltmaßnahme (el) am Transponder (TP) auslösbar ist.

3. Zugangs- und Start-/Fahrberechtigungssystem nach Anspruch 1,
**dadurch gekennzeichnet,**
**dass** die Einleitung des Zugangsberechtigungs-Frage-Antwort-Dialoges (ZD) von der Anwesenheit des Transponders (TP) in einem von einem Näherungsschalter im Kraftfahrzeug (KFZ) überwachten Umfeld des Kraftfahrzeuges abhängig gemacht ist.

4. Zugangs- und Start-/Fahrberechtigungssystem nach einem der Ansprüche 1 bis 3,
**dadurch gekennzeichnet,**
**dass** das Steuergerät (SG) nach erfolgreichem Zugangsberechtigungs-Frage-Antwort-Dialog (ZD) die Entriegelung (ss) des Schließsystems einleitet und eine Zusatzinformation (zok) für den nachfolgenden Start/Fahrberechtigungs-Frage-Antwort-Dialog (SFD) bereithält und gegebenenfalls mit einem Steuerbefehl (ms) an andere Steuergerät weitergibt.

5. Zugangs- und Start-/Fahrberechtigungssystem nach einem der Ansprüche 1 bis 4,
**dadurch gekennzeichnet,**
**dass** die Einleitung des Start-Fahrberechtigungs-Frage-Antwort-Dialoges (SFD) von dem Ablegen des Transponders (TP) in ein Ablagefach im Kraftfahrzeug (KFZ) oder einem anderen im Kraftfahrzeug (KFZ) ausgelösten Einleitungssignal (Et) für das Steuergerät (SG) abhängig gemacht ist.

6. Zugangs- und Start-/Fahrberechtigungssystem nach einem der Ansprüche 1 bis 5,
**dadurch gekennzeichnet,**
**dass** bei erfolgreichem Start/Fahrberechtigungs-Frage-Antwort-Dialog (SFD) die Ansteuerung (ms) der Motorsteuerung zur Freigabe des Starts und der Fahrt nur bei anstehender Zusatzinformation (zok) vom vorausgegangenen Zugangsberechtigungs-Frage-Antwort-Dialog (ZD) erfolgt.

7. Zugangs- und Start-/Fahrberechtigungssystem nach einem der Ansprüche 1 bis 6,
**dadurch gekennzeichnet,**
**dass** die Freigabe des Starts und der Fahrt für das Kraftfahrzeug (KFZ) zusätzlich vom Schaltzustand des Schließsystems abhängig gemacht ist.

8. Zugangs- und Start-/Fahrberechtigungssystem nach einem der Ansprüche 1 bis 7,
**dadurch gekennzeichnet,**
**dass** für die Freigabe des Starts und der Fahrt des Kraftfahrzeuges (KFZ) vorgegebene Zustände und/oder Betätigungsfolgen weiterer Fahrzeugkomponenten einbezogen sind.

9. Zugangs- und Start-/Fahrberechtigungssytem nach einem der vorhergehenden Ansprüche,
**dadurch gekennzeichnet,**
**dass** außer der Motorsteuerung auch andere, für das Starten und das Fahren des Kraftfahrzeuges (KFZ) notwendige Komponenten, beispielsweise die Getriebesteuerung, durch die vom Steuergeräte (SG) nach erfolgreich durchgeführtem Zugangsberechtigungs-Frage-Antwort-Dialog (ZD) ausgehende Ansteuerung (ms) in einen funktionsfähigen Betriebszustand gebracht werden.

10. Zugangs- und Start-/Fahrberechtigungssystem nach einem der vorhergehenden Ansprüche,
**dadurch gekennzeichnet,**
**dass** die Motorsteuerung sowie andere erfindungsgemäß ausgestaltete, für das Starten und das Fahren des Kraftfahrzeuges (KFZ) relevante Komponenten, beispielsweise die Getriebesteuerung, nach ordnungsgemäßem Verriegeln der Tür(en) des Kraftfahrzeuges (KFZ) durch eine entsprechende Information (ms) des Steuergerätes (SG) sich in einen funktionsunfähigen Zustand bringen und erst nach Empfang eines vom Steuergerät (SG) nach erfolgreich durchgeführtem Zugangsberechtigungs-Frage-Antwort-Dialog (ZD) ausgesandten Steuerbefehls (ms) wieder in Betrieb zu setzen sind.

11. Zugangs- und Start-/Fahrberechtigungssystem nach einem der vorhergehenden Ansprüche,
**dadurch gekennzeichnet,**
**dass** sich die Motorsteuerung sowie andere erfindungsgemäß ausgestaltete, für das Starten und das Fahren des Kraftfahrzeuges (KFZ) relevante Komponenten, beispielsweise die Getriebesteuerung, nach Abklemmen von der Versorgungs-/Betriebsspannung in einen funktionsunfähigen Zustand bringen und erst nach Empfang eines vom Steuergerät (SG) nach erfolgreich durchgeführtem Zugangsberechtigungs-Frage-Antwort-Dialog (ZD) ausgesandten Steuerbefehls (ms) wieder in Betrieb genommen werden können.

12. Zugangs- und Start-/Fahrberechtigungssystem nach einem der vorhergehenden Ansprüche,
**dadurch gekennzeichnet,**
**dass** die vom Steuergerät (SG) nach erfolgreich durchgeführtem Zugangsberechtigungs-Frage-Antwort-Dialog (ZD) ausgesandte Ansteuerung (ms, ms') codiert übertragen wird.

13. Zugangs- und Start-/Fahrberechtigungssystem nach einem der vorhergehenden Ansprüche,
**dadurch gekennzeichnet,**
**dass** der Transponder (TP), das Steuergerät (SG) und die Motorsteuerung sowie andere, erfindungsgemäß gestaltete und eingesetzte Komponenten des Kraftfahrzeuges (KFZ) vom Fahrzeughersteller gemeinsam derart aufeinander angelernt werden, dass bei Fehlen oder Austausch einer dieser Komponenten ohne anschließendes Neuanlernen aller Systembestandteile ein Starten und Fahren nicht möglich ist, und
**dass** zum Anlernen besondere Sicherheitsmaßnahmen ergriffen werden müssen, etwa die Verwendung besonderer Berechtigungsnachweise.

14. Zugangs- und Start-/Fahrberechtigungssystem nach einem der vorhergehenden Ansprüche,
**dadurch gekennzeichnet,**
**dass** durch besondere Betätigung eines oder mehrerer Türinnengriffe dem Steuergerät (SG) eine Notsituation angezeigt wird, auf die das Steuergerät (SG) mit der Aussendung eines besonderen Steuersignals (ms') reagiert, wodurch zumindest die Motorsteuerung dazu veranlaßt wird, nur noch kurzzeitig das Starten und Fahren des Kraftfahrzeugs (KFZ) zuzulassen, sich anschließend vollständig außer Funktion setzt und eine weitere Nutzung des Fahrzeugs (KFZ) unmöglich macht.

15. Zugangs- und Start-/Fahrberechtigungssystem nach Anspruch 14,
**dadurch gekennzeichnet,**
**dass** nach Eingang des besonderen Steuersignals (Z') der Start-Fahrberechtigungs-Frage-Antwort-Dialog (SFD) ausgelöst wird und alle dabei erkannten Transponder für zukünftige Benutzung mit dem Kraftfahrzeug (KFZ) gesperrt werden.

16. Zugangs- und Start-/Fahrberechtigungssystem nach Anspruch 14 oder 15, **dadurch gekennzeichnet,**
**dass** die Funktionssperrung aller Komponenten nur nach erfolgreichem Zugangs-Frage-Antwort-Dialog (ZD) mit einem anderen als dem bzw. den gesperrten Transponder(n) (TP) aufgehoben wird.

17. Zugangs- und Start-/Fahrberechtigungssystem nach den Ansprüchen 14 bis 16,
**dadurch gekennzeichnet,**
**dass** außer der Motorsteuerung auch andere betriebsrelevante Komponenten einbezogen sind.

## Claims

1. Access and start/drive authorization system for a motor vehicle having a portable transponder and a control device, accommodated in the motor vehicle, for the lock system and the engine controller which enable or disable access to the motor vehicle, the start and driving of the motor vehicle in enquiry/response dialogues with matched code information, **characterized in that** the enabling (ms) of the start and of the driving of the motor vehicle (KFZ) is made dependent, after a successful start/driving authorization enquiry/response dialogue (SFD) with the transponder (TG), on a preceding successful access authorization enquiry/response dialogue (ZD) with the transponder (TG).

2. Access and start/drive authorization system according to Claim 1, **characterized in that** the initiation of the access authorization enquiry/response dialogue (ZD) at the control device (SG) is dependent on an initiation signal (z) which can be triggered by a manual switching measure (z) of the motor vehicle (KFZ) or a manual switching measure (e1) at the transponder (TP).

3. Access and start/drive authorization system according to Claim 1, **characterized in that** the initiation of the access authorization enquiry/response dialogue (ZD) is made dependent on the presence of the transponder (TP) in an area around the motor vehicle which is monitored by a proximity switch in the motor vehicle (KFZ).

4. Access and start/drive authorization system according to one of Claims 1 to 3, **characterized in that**, after a successful access authorization enquiry/response dialogue (ZD), the control device (SG) initiates the unlocking (ss) of the lock system and holds in readiness a supplementary information item (zok) for the following start/drive authorization enquiry/response dialogue (SFD) and if appropriate passes it on with a control instruction (ms) to other control devices.

5. Access and start/drive authorization system according to one of Claims 1 to 4, **characterized in that** the initiation of the start/drive authorization enquiry/response dialogue (SFD) is made dependent on the placing of the transponder (TP) in a storage compartment in the motor vehicle (KFZ) or on another initiation signal (Et), triggered in the motor vehicle (KFZ), for the control device (SG).

6. Access and start/drive authorization system according to one of Claims 1 to 5, **characterized in that** when there is a successful start/drive authorization enquiry/response dialogue (SFD), the actuation (ms) of the engine controller to enable the start and driving takes place only when there is supplementary information (zok) present from the preceding access authorization enquiry/response dialogue (ZD).

7. Access and start/drive authorization system according to one of Claims 1 to 6, **characterized in that** the enabling of the start and of the driving for the motor vehicle (KFZ) is made additionally dependent on the switched state of the lock system.

8. Access and start/drive authorization system according to one of Claims 1 to 7, **characterized in that** predefined states and/or activation sequences of further vehicle components are included in the enabling of the start and of the driving of the motor vehicle (KFZ).

9. Access and start/drive authorization system according to one of the preceding claims, **characterized in that**, apart from the engine controller, other components which are necessary for starting and driving the motor vehicle (KFZ), for example the gearbox controller, are also placed in a functionally capable operating state by the actuation (ms) which originates from the control devices (SG) after a successfully executed access authorization enquiry/response dialogue (ZD).

10. Access and start/drive authorization system according to one of the preceding claims, **characterized in that** the engine controller and other components, for example the gearbox controller, which are configured according to the invention and are relevant to the starting and driving of the motor vehicle (KFZ), go into a functionally incapable state after satisfactory locking of the door(s) of the motor vehicle (KFZ) by corresponding information (ms) of the control device (SG), and cannot be reactivated again until after reception of a control instruction (ms) which has been emitted by the control device (SG) after a successfully executed access authorization enquiry/response dialogue (ZD).

11. Access and start/drive authorization system according to one of the preceding claims, **characterized in that** the engine controller and other components, for example the gearbox controller, which are configured according to the invention and are relevant to the starting and driving of the motor vehicle (KFZ), go into a functionally incapable state after disconnection from the supply/operating voltage, and cannot be reactivated again until after reception of a control instruction (ms) which has been emitted by the control device (SG) after a successfully executed access authorization enquiry/response dialogue (ZD).

12. Access and start/drive authorization system according to one of the preceding claims, **characterized in that** the actuation (ms, ms') which is emitted by the control device (SG) after a successfully executed access authorization enquiry/response dialogue (ZD) is transmitted in coded form.

13. Access and start/drive authorization system according to one of the preceding claims, **characterized in that** the transponder (TP), the control device (SG) and the engine controller as well as other components of the motor vehicle (KFZ), used and configured according to the invention, are trained jointly with respect to one another by the vehicle manufacturer in such a way that when one of these components is missing or replaced without subsequently retraining all the system components it is not possible to start or drive, and **in that** particular safety measures have to be taken for the training, for example the use of particular authorization proofs.

14. Access and start/drive authorization system according to one of the preceding claims, **characterized in that** by a particular actuation of one or more door internal handles, an emergency situation is indicated to the control device (SG), said control device (SG) reacting to said emergency situation by emitting a particular control signal (ms'), as a result of which at least the engine controller is prompted to permit the starting and driving of the motor vehicle (KFZ) only for a brief time, subsequently completely deactivates itself and makes further use of the vehicle (KFZ) impossible.

15. Access and start/drive authorization system according to Claim 14, **characterized in that** after the inputting of the particular control signal (Z'), the start/drive authorization enquiry/response dialogue (SFD) is triggered and all the transponders which are detected in the process are disabled for future use with the motor vehicle (KFZ).

16. Access and start/drive authorization system according to Claim 14 or 15, **characterized in that** the functional disabling of all the components is lifted only after a successful access enquiry/response dialogue (ZD) with a transponder other than the disabled transponder or transponders (TP).

17. Access and start/drive authorization system according to Claims 14 to 16, **characterized in that**, apart from the engine controller, other operationally relevant components can also be included.

## Revendications

1. Système d'autorisation d'accès, de démarrage et de conduite destiné à un véhicule automobile, utilisant un transpondeur portable et un appareil monté dans le véhicule, pour la commande du système de fermeture et de commande du moteur qui, par des dialogues question-réponse utilisant des informations codées accordées entre elles libèrent ou bloquent l'accès au véhicule, son démarrage et sa conduite,
**caractérisé en ce que**
la libération (ms) du démarrage et de la conduite du véhicule automobile (KFZ) après l'aboutissement positif du dialogue (SFD) question-réponse d'autorisation du démarrage et de la conduite (SFD) est rendue dépendante d'un dialogue question-réponse d'autorisation d'accès, ayant préalablement abouti positivement.

2. Système d'autorisation d'accès et de démarrage et de conduite selon la revendication 1,
**caractérisé en ce que**
l'engagement sur l'appareil de commande (SG) du dialogue d'autorisation d'accès (ZD) dépend d'un signal d'engagement (z) qui peut être déclenché par une manoeuvre de commutation (z) effectuée sur le véhicule (KFZ) ou par une manoeuvre de commutation (el) effectuée sur le transpondeur (TP).

3. Système d'autorisation d'accès et de démarrage et de conduite selon la revendication 1,
**caractérisé en ce que**
l'engagement du dialogue question-réponse d'autorisation d'accès (ZD) est rendu dépendant de la présence du transpondeur (TP) dans une zone périphérique entourant le véhicule et que surveille un commutateur de proximité monté dans le véhicule (KFZ).

4. Système d'autorisation d'accès et de démarrage et de conduite selon l'une quelconque des revendications 1 à 3,
**caractérisé en ce que**
l'appareil de commande (SG) après aboutissement positif du dialogue d'autorisation d'accès (ZD) engage le déverrouillage (ss) du système de fermeture en tenant prête une information auxiliaire (zok) destinée au dialogue d'autorisation de démarrage (SFD) qui suit et en la transmettant le cas échéant avec un ordre de commande (ms) à d'autres appareils de commande.

5. Système d'autorisation d'accès et de démarrage et de conduite selon l'une quelconque des revendications 1 à 4,
**caractérisé en ce que**
l'engagement du dialogue d'autorisation de démarrage et de conduite (SFD) est rendu dépendant du dépôt du transpondeur (TP) dans un compartiment de dépôt prévu dans le véhicule (KFZ), ou d'un autre signal d'engagement (Et) déclenché dans le véhicule (KFZ) et destiné à l'appareil de commande (SG).

6. Système d'autorisation d'accès et de démarrage et de conduite selon l'une quelconque des revendications 1 à 5,
**caractérisé en ce que**
quand le dialogue d'autorisation de démarrage et de conduite (SFD) a abouti positivement, l'excitation (ms) de la commande de moteur pour libérer le démarrage et la conduite n'est produite qu'en présence de l'information auxiliaire (zok) provenant du dialogue question-réponse d'autorisation d'accès (ZD) qui a eu lieu précédemment.

7. Système d'autorisation d'accès et de démarrage et de conduite selon l'une quelconque des revendications 1 à 6,
**caractérisé en ce que**
la libération du démarrage et de la conduite du véhicule (KFZ) est rendue de plus dépendante de l'état de commutation du système de fermeture.

8. Système d'autorisation d'accès et de démarrage et de conduite selon l'une quelconque des revendications 1 à 7,
**caractérisé en ce que**
pour libérer le démarrage et la conduite du véhicule (KFZ), on intègre des états prédéterminés et/ou des conséquences de manoeuvres d'autres composants du véhicule.

9. Système d'autorisation d'accès et de démarrage et de conduite selon l'une quelconque des revendications précédentes,
**caractérisé en ce qu'**
en plus de la commande du moteur, également d'autres composants nécessaires au démarrage et à la conduite du véhicule (KFZ), par exemple la commande de la transmission, sont mis en état de fonctionner par l'excitation (ms) délivrée par l'appareil de commande (SG) après aboutissement positif du dialogue d'autorisation d'accès (ZD).

10. Système d'autorisation d'accès et de démarrage et de conduite selon l'une quelconque des revendications précédentes,
**caractérisé en ce que**
la commande du moteur ainsi que d'autres composants intéressant le démarrage et la conduite du véhicule (KFZ), en particulier la commande de la transmission, se mettent dans l'incapacité de fonctionner après verrouillage normal de la (ou des) porte(s) en recevant une information (ms) correspondante délivrée par l'appareil de commande, pour retrouver cette capacité seulement après réception d'un ordre de commande (ms) envoyé par l'appareil de commande (SG) après aboutissement positif du dialogue d'autorisation d'accès (ZD).

11. Système d'autorisation d'accès et de démarrage et de conduite selon l'une quelconque des revendications précédentes,
**caractérisé en ce que**
la commande du moteur ainsi que d'autres composants configurés selon l'invention et intéressant le démarrage et la conduite du véhicule automobile (KFZ), par exemple la commande de la transmission, se mettent dans l'incapacité de fonctionner après coupure de la tension d'alimentation et de fonctionnement et ne peuvent être remis en fonctionnement qu'après réception d'un ordre (ms) émis par l'appareil de commande (SG) après aboutissement positif du dialogue d'autorisation d'accès (ZD).

12. Système d'autorisation d'accès et de démarrage et de conduite selon l'une quelconque des revendications précédentes,
**caractérisé en ce que**
la commande (ms, ms') envoyée par l'appareil de commende (SG) après aboutissement positif du dialogue d'autorisation d'accès (ZD), est transmise sous forme codée.

13. Système d'autorisation d'accès et de démarrage et de conduite selon l'une quelconque des revendications précédentes,
**caractérisé en ce que**
le transpondeur (TP), l'appareil de commande (SG), la commande du moteur ainsi que d'autres composants du véhicule (KFZ), configurés et mis en oeuvre selon l'invention, sont tous adaptés les uns aux autres par le constructeur du véhicule de manière que la défaillance ou l'échange d'un de ces composants qui n'est pas suivie d'une nouvelle adaptation réciproque de tous les composants du système, rend impossible un démarrage ou une conduite et que pour réaliser cette adaptation, des mesures particulières de sécurité doivent être prises, par exemple l'utilisation de preuves particulières de l'autorisation.

14. Système d'autorisation d'accès et de démarrage et de conduite selon l'une quelconque des revendications précédentes,
**caractérisé en ce que**
la manoeuvre particulière d'une ou plusieurs poignées intérieures de porte indique à l'appareil de commande (SG) une situation de danger à laquelle celui-ci réagit en envoyant un signal de commande (ms') particulier qui autorise au moins la commande du moteur à permettre le démarrage et la conduite du véhicule (KFZ)seulement pendant une courte durée, pour ensuite cesser totalement de fonctionner et rendre impossible une nouvelle utilisation du véhicule (KFZ).

15. Système d'autorisation d'accès et de démarrage et de conduite selon la revendication 14,
**caractérisé en ce qu'**
après entrée du signal de commande particulier (Z'), le dialogue question-réponse d'autorisation de démarrage et de conduite (SFD) est déclenché et tous les transpondeurs connus sont bloqués en ce qui concerne leur utilisation à l'avenir avec le véhicule (KFZ).

16. Système d'autorisation d'accès et de démarrage et de conduite selon la revendication 14 ou 15,
**caractérisé en ce que**
le blocage du fonctionnement de tous les composants n'est levé qu'après aboutissement positif d'un dialogue d'autorisation d'accès, avec un autre que le ou les transpondeurs (TP) bloqués.

17. Système d'autorisation d'accès et de démarrage et de conduite selon l'une quelconque des revendications 14 à 16,
**caractérisé en ce qu'**
en dehors de la commande du moteur, également d'autres composants intéressant le fonctionnement sont concernés.
